(19) 

Europäisches
Patentamt
European
Patent Office
Office européen
des brevets

(11) **EP 2 926 665 A1**

(12) **EUROPEAN PATENT APPLICATION**
published in accordance with Art. 153(4) EPC

(43) Date of publication:
**07.10.2015 Bulletin 2015/41**

(21) Application number: **13859487.4**

(22) Date of filing: **18.07.2013**

(51) Int Cl.:
*A21D 10/00* [(2006.01)]    *A21D 10/02* [(2006.01)]
*A23L 1/10* [(2006.01)]

(86) International application number:
**PCT/KR2013/006427**

(87) International publication number:
**WO 2014/084477 (05.06.2014 Gazette 2014/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.11.2012 KR 20120136533**

(71) Applicant: **Samsung Fine Chemicals Co., Ltd.
Ulsan-city 680-090 (KR)**

(72) Inventors:
• **LIM, Eun Ji
  Daegu 703-700 (KR)**
• **LEE, Eun Jung
  Seoul 137-797 (KR)**
• **CHOI, Su Jung
  Yongin-si
  Gyeonggi-do 449-780 (KR)**

(74) Representative: **Kador & Partner
Corneliusstraße 15
80469 München (DE)**

(54) **RICE DOUGH COMPOSITION, AND RICE DOUGH PREPARED THEREFROM**

(57)    Provided is a rice dough composition and a rice dough prepared therefrom. The rice dough composition includes rice flour, cellulose ether, gums, and emulsifier. The rice dough composition may be used to prepare a rice dough that may be eaten by people sensitive to gluten and has a mouthfeel different from a rice dough obtained from wheat flour. When the rice dough is re-cooked by heating after being stored in a frozen state, evaporation of water is inhibited and mouthfeel changes due to a hardening phenomenon may be reduced.

EP 2 926 665 A1

**Description**

TECHNICAL FIELD

The inventive concept relates to a rice dough composition and a rice dough prepared therefrom.

BACKGROUND ART

Dumpling skins are generally prepared by mixing raw materials, such as flour, salt, and water, to obtain dough, kneading the dough, flattening the dough to form a dough sheet, and cutting the dough sheet. Typically, the flour is wheat flour, and gluten in the wheat flour affects the viscoelasticity and texture of the dough.

However, gluten in wheat flour is also known to cause celiac disease. This disease is mainly caused by gliadin in wheat and may induce diarrhea, abdominal cramping, or failure to thrive. Therefore, there has been an increased interest in gluten-free food based on rice for people sensitive to gluten, such as celiac patients, and much research on this matter has been conducted.

Generally, in order to knead rice flour like wheat flour, an ingredient like gluten that can develop a network structure is needed, however, no such ingredient exist in the rice powder. As such ingredient does not exist, dough breaks apart during kneading due to lack of viscoelasticity, noodles are not sticky even though dough does not break apart during kneading, and the mouthfeel of products made from the dough while eating is poor. Thus, there is a limit to take advantage of the diversification of products made from rice flour like in the case of products made from wheat flour.

DETAILED DESCRIPTION OF THE INVENTIVE CONCEPT TECHNICAL PROBLEM

The inventive concept provides a rice dough composition including rice as a main material.

The inventive concept provides a rice dough prepared from the rice dough composition.

TECHNICAL SOLUTION

According to an aspect of the inventive concept, there is provided a rice dough composition including rice flour, cellulose ether, gums, and emulsifier.

According to another aspect of the inventive concept, there is provided a rice dough including rice flour, cellulose ether, gums, and emulsifier.

ADVANTAGEOUS EFFECTS

When the rice dough composition according to an exemplary embodiment is used, a rice dough that may be eaten by people sensitive to gluten and that has a mouthfeel different from that of a dough made from wheat flour may be obtained. When the rice dough is re-cooked by heating after being stored in a frozen state, water evaporation is suppressed in the rice dough and a mouthfeel change thereof due to a hardening phenomenon may decrease.

BEST MODE

Hereinafter, a rice dough composition according to an exemplary embodiment and a rice dough prepared from the same will be described in detail.

The rice dough composition includes rice flour, cellulose ether, gums, and emulsifier.

The rice dough composition includes rice as a main material without including wheat flour, which may cause gastrointestinal disorders or celiac disease. The rice dough composition further includes cellulose ether, so that a dough made from the rice dough composition may have a network structure and viscoelasticity similar to those of a dough having gluten, and gums and an emulsifier, so that the processing suitability of the rice dough is excellent.

In addition, when preparing a rice dough from the rice dough composition, the viscoelasticity of the rice dough may be effectively increased by mixing the dough with hot water.

By using the rice dough composition, it is possible to produce a gluten-free rice dough, which is beneficial to people sensitive to gluten, such as celiac patients. When the rice dough is re-cooked by heating after being stored in a frozen state, evaporation of water is inhibited and a mouthfeel change thereof due to a hardening phenomenon may be reduced.

The most edible portion of rice is starch, which accounts for 75 to 80 wt% of the rice. Also, in rice, protein accounts for 6 to 8 wt% of the rice, and lipid, fiber, and ash each accounts for 1 to 3 wt% of the rice and are enriched with minerals and vitamins.

The rice may be used in a powder form having an average particle diameter in a range of 30 to 100μm, which is similar to a particle diameter of medium wheat flour. Rice powder having such an average particle diameter may be obtained via a dry milling process.

The functional properties of rice flour are influenced by a method of milling the rice.

Dry milling causes an increase of starch damage of rice flour and generation of much heat, thereby having an undesirable effect on rice products. Due to this reason, although cumbersome, wet milling method has been used. However, rice flour obtained by dry milling has a narrow particle size distribution and fine particles compared to rice flour obtained by wet milling, and thus, rice products made from rice flour obtained by dry milling have excellent organoleptic properties. In addition, because there is no loss of amylose due to water penetration, rice flour obtained by dry milling has glutinousness compared to rice flour obtained by wet milling, and thus, the rice flour obtained by dry milling may have excellent water retention and water binding capability, and thus, the evaporation of water may be suppressed and a mouthfeel change due to a hardening phenomenon may be prevented therein.

During the dry milling process, an air mill or a ball mill may be used as pulverizer. In dry milling by an air mill, particles collide each other by an air stream. By maintaining an internal temperature of the dry mill 40°C or less, for example, from 25 to 40°C, denaturation of starch particles and a degree of starch damage due to dry milling may be reduced.

The rice flour is Milyang no. 260 type, Hanareum type , or commercially available rice flour including rice flour for making noodle. The Milyang no. 260 type is a high-amylose type with a high amylose content and the Hanareum type is a super high yielding ability type with an excellent yield ability.

The rice flour for making noodle is, for example, rice flour for making noodle available from Nongshim flour mills CO., LTD.

The cellulose ether in the rice dough composition complements a dough so that the dough may have a network structure and viscoelasticity similar to those of a dough having gluten and provide physical properties, such as thickneninng property, freezing/thawing stability, lubricity, moisture retention, water releasing ability, consistency, shape retention, emulsibility, binding ability, suspendability, or gelation property.

The cellulose ether may include at least one selected from hydroxypropylmethylcellulose (HPMC), methylcellulose (MC), and carboxymethylcellulose (CMC).

The HPMC has an amount of hydroxypropoxy group in a range of 4 to 12 wt% and an amount of methoxy group in a range of 19 to 30 wt%. The 'amount of hydroxypropoxy group' and the 'amount of methoxy group' refer to a weight percentage of each substituent in the HPMC.

The cellulose ether may be in an amount of 0.3 to 3.0 parts by weight based on 100 parts by weight of rice flour. When the amount of the cellulose ether is within this range, a dough sheet may be easily formed without degradation of processing suitability of the rice dough composition.

The gums is a kind of heteropolysaccharides having a high viscosity at a low concentration, and serves as a binder that enhances the binding ability of each component in the rice dough composition as well as an emulsifier, a stabilizer, an adhesive, a swelling agent, and a gel forming agent.

The gums may include at least one selected from xanthan gum, guar gum, carrageenan, alginate, locust bean gum, propylene glycol alginate (PGA), and agar.

The gums may be used in an amount of 0.1 to 0.5 parts by weight based on 100 parts by weight of the rice flour. When the amount of gums is within this range, the processing ability of the rice dough composition may be excellent.

The emulsifier is a material added in order to enhance roller processing ability of the rice dough composition.

The emulsifier may include vegetable oil, rice germ oil (rice bran oil) or etc. The vegetable oil may be any vegetable oil that is commonly used in the art.

An amount of the emulsifier may be from 1 to 5 parts by weight based on 100 parts by weight of the rice flour. When an amount of emulsifier is within this range, the roller processing ability of the rice dough composition may be excellent, and thus, a range of application thereof is widened.

Hereinafter, a method of preparing a rice dough using the rice dough composition will be described.

A rice dough composition including rice flour, cellulose ether, gums, and emulsifier may be prepared.

Then, the rice dough composition may be mixed with hot water. In this case, the viscoelasticity of the rice dough may increase.

The mixing with hot water may be performed using hot water at 75 to 100°C. Gelatinization of starch begins at a temperature of about 75°C or more, and since the rice flour does not include any material that can develop a network structure just as gluten develops a network structure in wheat flour, the mixing with hot water may be performed to gelatinize some of the starch so as to provide viscosity with the rice dough.

A dough sheet may be formed from the rice dough composition that was mixed with hot water, and once cutting of the same is complete, a rice dough may be obtained.

Water and salt may be added to the rice dough composition.

An amount of the water may be in 30 to 100 parts by weight based on 100 parts by weight of the rice flour.

The salt may increase the viscoelasticity of the rice dough composition and confer an excellent mouthfeel thereto. An amount of the salt may be in 0.3 to 1.5 parts by weight based on 100 parts by weight of the rice flour.

When an amount of the water and salt is within this range, the viscoelasticity of the rice dough composition is appropriate, and thus, processing of the rice dough may be easily carried out.

The rice dough, although not limited thereto, may include rice dumpling skin, rice kalguksu, rice noodle, rice udon, rice jajangmyun, rice pasta, or rice sujebi.

When the rice dough composition according to an exemplary embodiment is used, it is possible to obtain a rice dough including rice flour as the main material, wherein syneresis and mouthfeel changes due to a hardening phenomenon are prevented in the rice dough during frozen storage thereof. Further, when re-cooking the frozen food including rice flour as the main material by heating, water evaporation may be prevented, and mouthfeel changes due to a hardening phenomenon may be reduced.

A rice dough obtained from the rice dough composition is prepared using rice flour so that those people sensitive to gluten may eat it, and consumption of processed rice products may also increase by meeting the consumers needs with the diversification of processed rice products using an appropriate type of rice or common rice.

In addition, the rice dough has excellent freezing/thawing stability, thereby preventing a mouthfeel change due to a hardening phenomenon that may occur because of aging of starch during storage. Thus, the rice dough may be frozen stored for a long period while maintaining steady quality, and syneresis may be reduced during frozen storing, thereby enabling the preparation of food with a small water content change. Furthermore, water evaporation and quality changes due to a hardening phenomenon that may occur while re-heating the rice dough in a microwave range may be prevented due to excellent microwave range cooking characteristics. Accordingly, consumers' convenience, such as shorten cooking time and improved cooking efficiency, may be provided to consumers who avoid microwave range cooking due to decrease of mouthfeel.

MODE OF THE INVENTIVE CONCEPT

Hereinafter, the inventive concept will be described in detail with reference to Examples below. However, the following Examples are merely intended to illustrate the inventive concept, the inventive concept is not limited thereto, and some changes and modifications within the scope of the inventive concept may be possible.

As HPMC, HPMC2910 (produced by Samsung Fine Chemicals Co., Ltd., AnyCoat-C CN40H) was used in the following Examples 1 to 17 and Comparative Examples 1 to 3.

Gums used in Examples 1 to 12 are shown in Table 1.

[Table 1]

| Class | Gums | Product name/Sales company |
|---|---|---|
| Examples 1, 5, and 9 | Xanthan gum | Xanthan gum/Sandong Fufeng Fermentation Co., China |
| Example 2, 6, and 10 | Guar gum | Guar gum/Lotus gums & Chemical Co., India |
| Example 3, 7, and 11 | Carrageenan | Carrageenan/Marcel Trading Co., Philippines |
| Example 4, 8, and 12 | PGA | PGA / Kimica Co., Japan |

Examples 1 to 4: Preparation of rice dumpling skins

Dry milling was performed on rice of Milyang no. 260 type by using an air classifying mill (ACM) under the following conditions: blower motor 3,600 rpm, mill motor 3,000 rpm, classifier motor 900 rpm, and screwer motor 5 rpm. Thus, dry milled Milyang no. 260 type rice flour having an average particle diameter of about 30 to about 100 μm was obtained.

62.4 parts by weight of dry milled Milyang no. 260 type rice flour, 0.6 part by weight of salt, 0.6 part by weight of HPMC, and 0.2 part by weight of gum were mixed to prepare a rice dumpling skin composition, and the rice dumpling skin composition were mixed with hot water while adding 34.3 parts by weight of how water and 1.9 parts by weight of vegetable oil thereto. An amount of HPMC was 0.96 part by weight based on 100 parts by weight of rice flour, and an amount of gum was 0.32 part by weight based on 100 parts by weight of rice flour.

A dough sheet was formed by kneading after the mixing with hot water, and the dough sheet was cut to a piece having a thickness of 1 mm and a diameter of 30 mm, thereby preparing a round rice dumpling skin.

Examples 5 to 8: Preparation of rice dumpling skins

A round rice dumpling skin having a thickness of 1 mm and a diameter of 30 mm was prepared in the same manner as in Examples 1 to 4, except that Hanareum rice flour was used instead of Milyang no. 260 type rice flour.

Examples 9 to 12: Preparation of rice dumpling skins using commercially available rice flour

A round rice dumpling skin having a thickness of 1 mm and a diameter of 30 mm was prepared in the same manner as in Examples 1 to 4, except that rice flour for making noodle was used instead of Milyang no. 260 type rice flour.
As for the rice flour for making noodle, commercially available rice flour for making noodle (Nongshim flour mills CO., LTD., Korea) was used for evaluation of availability of general rice flour.

Examples 13 to 16: Preparation of rice dumpling skins

Round rice dumpling skins were prepared in the same manner as in Example 1, except that 0.19 part by weight, 0.37 part by weight, 0.75 part by weight, 1.87 part by weight of HPMC were used respectively, instead of 0.6 part by weight of HPMC. In the rice dumpling skin compositions of Examples 13 to 16, HPMC was used in an amount of 0.3 part by weight, 0.6 part by weight, 1.2 parts by weight, and 3.0 parts by weight based on 100 parts by weight of the rice flour.

Example 17: Preparation of rice dumpling skins

A round rice dumpling skin was prepared in the same manner as in Example 1, except that 0.13 part by weight of gum was used instead of 0.2 part by weight of gum. In the rice dumpling skin composition of Example 17, gums was used in an amount of 0.2 parts by weight based on 100 parts by weight of the rice flour.

Comparative Examples 1 to 3

Rice dumpling skins were prepared as in Example 1, except that dry milled Milyang no. 260 type, Hanareum type, and rice flour for making noodle were respectively used as rice flour, without including HPMC and gum.

Comparative Example 4

Comparative Example 4 was performed in the same manner as Comparative Example 3, except that wet milled Milyang no. 260 type rice flour was used instead of dry milled Milyang no. 260 type rice flour.

Wet milled Milyang no. 260 type rice flour was obtained by washing Milyang no. 260 type rice with water three times, immersing it in water at room temperature for 15 hours, draining it for 1 hour, milling it twice by using a roll mill, and then drying it in an oven by air-drying at 45 °C for 8 hours.

Comparative Examples 5 and 6

Comparative Examples 5 and 6 were performed in the same manner as Example 1, except that transglutaminase (TG) and isolated soy protein (ISP) were used, respectively, instead of HPMC.

Evaluation Example 1: Syneresis of rice dumpling skins during freezing/thawingprocess

The following process was performed in order to evaluate the freezing/thawing stability of the rice dumpling skins prepared in Examples 1 to 12 and Comparative Examples 1 to 3.
The rice dumpling skins prepared in Examples 1 to 12 and Comparative Examples 1 to 3 were packed in a polyethylene bag and quickly frozen (DF3514, Ilshin BioBase) at -40°C, and then frozen stored at -18°C for 23 hours. The stored rice dumpling skins were left to thaw at 20°C for 1 hour, and the freezing/thawing process was repeated seven times. Weights of the dumpling skins before the freezing/thawing process and weights of the dumpling skins after the freezing/thawing process were measured. Also syneresis was measured based on the Equation 1 below. The results thereof are shown in Table 2.

[Equation 1]

Syneresis (%) = [(weight before storage–weight after storage)/weight before storage] × 100

[Table 2]

| Class | | syneresis (%) | | | |
|---|---|---|---|---|---|
| | | 1 cycle | 3 cycle | 5 cycle | 7 cycle |
| Milyang no. 260 | Comparative Example 1 | 1.28 | 1.46 | 1.60 | 1.71 |
| | Example 1 | 1.20 | 1.22 | 1.27 | 1.50 |
| | Example 2 | 1.11 | 1.16 | 1.36 | 1.43 |
| | Example 3 | 0.71 | 0.79 | 0.97 | 1.00 |
| | Example 4 | 0.79 | 0.89 | 0.89 | 0.90 |
| Hanareum | Comparative Example 2 | 0.80 | 0.80 | 0.84 | 0.97 |
| | Example 5 | 0.65 | 0.75 | 0.81 | 0.82 |
| | Example 6 | 0.62 | 0.70 | 0.81 | 0.89 |
| | Example 7 | 0.72 | 0.73 | 0.75 | 0.81 |
| | Example 8 | 0.60 | 0.68 | 0.73 | 0.73 |
| Rice flour for making noodle | Comparative Example 3 | 0.79 | 0.89 | 0.90 | 0.96 |
| | Example 9 | 0.60 | 0.67 | 0.72 | 0.88 |
| | Example 10 | 0.74 | 0.84 | 0.88 | 0.89 |
| | Example 11 | 0.76 | 0.79 | 0.80 | 0.88 |
| | Example 12 | 0.78 | 0.84 | 0.86 | 0.92 |

As shown in Table 2, the rice dumpling skins prepared in Examples 1 to 4, the rice dumpling skins prepared in Examples 5 to 8, and the rice dumpling skins prepared in Examples 9 to 12 had low syneresis compared to the rice dumpling skins prepared in Comparative Example 1, the rice dumpling skins prepared in Comparative Example 2, and the rice dumpling skins prepared in Comparative Example 3, respectively, even though the freezing/thawing process was repeated.

Evaluation Example 2: Water loss rate due to re-heating of rice dumpling skins in microwave range

Evaluation of microwave range cooking characteristics of the rice dumpling skins prepared in Examples 1 to 12 and Comparative Examples 1 to 3 was performed according to the process below.

The rice dumpling skins prepared in Examples 1 to 12 and Comparative Examples 1 to 3 were steamed in a steamer for 3 minutes, and then, they were packed in a polyethylene bag and quickly frozen at -40°C and frozen stored at -18°C for 7 days. The stored rice dumpling skins were cooked in a microwave range (RE-C23ES, Samsung) for 10 seconds. Weights before re-heating in the microwave range and weights after re-heating in the microwave range were measured, and water loss rates were calculated according to Equation 2. The results thereof are shown in Table 3.

[Equation 2]

Water loss rate (%) = [(weight before re-heating – weight after re-heating)/weight before re-heating] × 100

[Table 3]

| | | Water loss rate (%) |
|---|---|---|
| Milyang no. 260 | Comparative Example 1 | 0.32 |
| | Example 1 | 0.22 |
| | Example 2 | 0.12 |
| | Example 3 | 0.11 |
| | Example 4 | 0.11 |
| Hanareum | Comparative Example 2 | 0.27 |
| | Example 5 | 0.24 |
| | Example 6 | 0.24 |
| | Example 7 | 0.11 |
| | Example 8 | 0.18 |
| Rice flour for making noodle | Comparative Example 3 | 0.69 |
| | Example 9 | 0.09 |
| | Example 10 | 0.52 |
| | Example 11 | 0.43 |
| | Example 12 | 0.21 |

As shown in Table 3, the rice dumpling skins prepared in Examples 1 to 4, the rice dumpling skins prepared in Examples 5 to 8, and the rice dumpling skins prepared in Examples 9 to 12 had low water loss rate during re-cooking in the microwave range compared to the rice dumpling skin prepared in Comparative Example 1, the rice dumpling skin prepared in Comparative Example 2, and the rice dumpling skin prepared in Comparative Example 3, respectively.

Evaluation Example 3: Hardness changes after re-heating of the rice dumpling skins in microwave range

Hardness changes of the rice dumpling skins prepared in Examples 1 to 12 and Comparative Examples 1 to 3 were evaluated according to the following process.
The rice dumpling skins prepared in Examples 1 to 12 and Comparative Examples 1 to 3 were steamed in a steamer for 3 minutes, and then, they were packed in a polyethylene bag. The paced rice dumpling skins were quickly frozen at -40°C, and then frozen stored at -18°C for 7 days. The rice dumpling skins stored in such condition were cooked for 10 seconds in a microwave range (RE-C23ES, Samsung), and hardness change thereof was measured by using a texture analyzer.
Hardness change rates were calculated based on Equation 3 below by using the measured results. The results thereof are show in Table 4.

[Equation 3]

Hardness change rate (%) = [(hardness before re-heating − hardness after re-heating)/hardness before re-heating]× 100

[Table 4]

| Rice type | Class | hardness change rate (%) |
|---|---|---|
| Milyang no. 260 | Comparative Example 1 | 19 |
| | Example 1 | 15 |
| | Example 2 | 8 |
| | Example 3 | 2 |
| | Example 4 | 17 |
| Hanareum | Comparative Example 2 | 24 |
| | Example 5 | 16 |
| | Example 6 | 10 |
| | Example 7 | 7 |
| | Example 8 | 11 |
| Rice flour for making noodle | Comparative Example 3 | 37 |
| | Example 9 | 33 |
| | Example 10 | 23 |
| | Example 11 | 11 |
| | Example 12 | 12 |

As shown in Table 4, the rice dumpling skins prepared in Examples 1 to 4, the rice dumpling skins prepared in Examples 5 to 8, and the rice dumpling skins prepared in Examples 9 to 12 showed a small hardness change so as to maintain their initial mouthfeel after re-heating in the microwave range compared to the rice dumpling skin prepared in Comparative Example 1, the rice dumpling skin prepared in Comparative Example 2, and the rice dumpling skin prepared in Comparative Example 3, respectively.

Evaluation Example 4: Processing ability experiment

1) Example 1 and Comparative Example 4

In order to test the processing abilities of rice dough compositions with a milling method for rice flour, the rice dough compositions prepared in Example 1 and Comparative Example 4 were mixed with hot water to form rice dough, and dough sheets were formed by kneading the rice dough, respectively. A state of dough was observed to evaluate the processing ability of the rice dough compositions, and the results thereof are shown in Table 5.
The processing ability was evaluated based on the following criteria.

Excellent: A state in which a moist dumpling skin can be formed after forming a dough sheet
Good: A state in which a dumpling skin can be formed after forming a dough sheet
Normal: A state in which a dumpling skin cannot be formed, although a state of dough is maintained after forming a dough sheet
Bad: A state in which a dumpling skin cannot be formed since dough breaks after forming a dough sheet.

[Table 5]

| Class | Processing ability |
|---|---|
| Example 1 | Excellent |
| Comparative Example 4 | Bad |

As shown in Table 5 above, the rice dough composition of Example 1 had excellent processing ability compared to that of Comparative Example 4.

2) Example 1 and Comparative Examples 5 and 6

In order to evaluate the processing abilities of rice dough compositions with the types of additives, the rice dough compositions prepared in Example 1 and Comparative Examples 5 and 6 were mixed with hot water to form rice dough, and dough sheets were formed by kneading the rice dough, respectively. A state of dough was observed to evaluate the processing ability, and the results thereof are shown in Table 6.

The processing ability was evaluated in the same manner as in the case of the rice dough compositions prepared in Example 1 and Comparative Example 4.

[Table 6]

|  | Processing ability |
| --- | --- |
| Example 1 | Excellent |
| Comparative Example 5 | Bad |
| Comparative Example 6 | Bad |

As shown in Table 6 above, the rice dough composition of Example 1 had excellent processing ability compared to those of Comparative Examples 5 and 6.

3) Examples 1 and 13 to 17

In order to test the processing abilities of the rice dough compositions with the amounts of HPMC and gums, the rice dough compositions prepared in Examples 1 and 13 to 17 were mixed with hot water to form rice dough, and dough sheets were formed by kneading the rice dough, respectively. A state of dough was observed to evaluate the processing ability, and the results thereof are shown in Table 7.

The processing ability was evaluated in the same manner as in the case of the rice dough compositions prepared in Example 1 and Comparative Example 4.

[Table 7]

|  | Processing ability |
| --- | --- |
| Example 1 | Excellent |
| Example 13 | Good |
| Example 14 | Excellent |
| Example 15 | Good |
| Example 16 | Good |
| Example 17 | Good |

As shown in Table 7 above, the rice dough compositions of Examples 1 and 13 to 17 had excellent or good processing ability.

While the inventive concept has been particularly shown and described with reference to exemplary embodiments thereof, it will be understood that various changes in form and details may be made therein without departing from the spirit and scope of the following claims.

When the rice dough composition according to an exemplary embodiment is used, a rice dough that may be eaten by people sensitive to gluten and that has mouthfeel different from a rice dough prepared from wheat flour may be obtained. When the rice dough is re-cooked by heating after being stored in a frozen state, water evaporation in the rice dough is suppressed and a mouthfeel change thereof due to a hardening phenomenon may decrease.

**Claims**

1. A rice dough composition comprising rice flour, cellulose ether, gums, and emulsifier.

2. The rice dough composition of claim 1, wherein the cellulose ether comprises at least one selected from hydroxypropylmethylcellulose (HPMC), methylcellulose (MC), and carboxymethylcellulose (CMC), and an amount of the cellulose ether is in a range of about 0.3 to about 3.0 parts by weight based on 100 parts by weight of the rice flour.

3. The rice dough composition of claim 2, wherein the HPMC has an amount of hydroxypropoxy group in a range of about 4 to about 12 wt% and an amount of methoxy group in a range of about 19 to about 30 wt%.

4. The rice dough composition of claim 1, wherein the gums include at least one selected from xanthan gum, guar gum, carrageenan, alginate, locust bean gum, propylene glycol alginate, and agar, and an amount of the gums is in a range of about 0.1 to about 0.5 part by weight based on 100 parts by weight of the rice flour.

5. The rice dough composition of claim 1, wherein the emulsifier is a vegetable oil or a rice germ oil, and an amount of the emulsifier is about 1 to about 5 parts by weight based on 100 parts by weight of the rice flour.

6. The rice dough composition of claim 1, wherein the rice flour is obtained by dry milling, and an average particle diameter of the rice flour is in a range of about 30 to about 100 $\mu$m.

7. A rice dough comprising rice flour, cellulose ether, gums, and emulsifier.

**INTERNATIONAL SEARCH REPORT**

| International application No. |
|---|
| **PCT/KR2013/006427** |

**A. CLASSIFICATION OF SUBJECT MATTER**

***A21D 10/00(2006.01)i, A21D 10/02(2006.01)i, A23L 1/10(2006.01)i***

According to International Patent Classification (IPC) or to both national classification and IPC

**B. FIELDS SEARCHED**

Minimum documentation searched (classification system followed by classification symbols)
A21D 10/00; A21D 8/00; A21D 13/04; A21D 2/08; A21D 2/36; A21D 6/00; A21D 10/02; A23L 1/10

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: rice flour, dough, cellulose ether, Xanthan gum, guar gum, carrageenan, alginate, locust bean gum, alginate propylene glycol, agar, emulsion, rice bran oil, vegetable oil

**C. DOCUMENTS CONSIDERED TO BE RELEVANT**

| Category* | Citation of document, with indication, where appropriate, of the relevant passages | Relevant to claim No. |
|---|---|---|
| Y | KR 10-2010-0112935 A (GACHON UNIVERSITY OF INDUSTRY-ACADEMIC COOPERATION FOUNDATION et al.) 20 October 2010 | 1-3,6-7 |
| A | See abstract; paragraphs [0013]-[0014]; and claim 1. | 4-5 |
| Y | KR 10-2005-0023693 A (RICE LAND CO., LTD.) 10 March 2005 See abstract; page 3, line 3; and claim 1. | 1-3,6-7 |
| A | KR 10-1995-0009031 B1 (KOREA FOOD RESEARCH INSTITUTE) 14 August 1995 See abstract; and claims 1-3. | 1-7 |
| A | KR 10-2009-0114721 A (INDUSTRIAL COOPERATION FOUNDATION CHONBUK NATIONAL UNIVERSITY) 04 November 2009 See abstract; paragraphs [0009], [0020] and [0045]; and claims 1-2. | 1-7 |
| A | KR 10-0260593 B1 (KANG, Mi-Young) 01 July 2000 See abstract; claims 1-2. | 1-7 |

| ☐ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 OCTOBER 2013 (14.10.2013) | **15 OCTOBER 2013 (15.10.2013)** |

| Name and mailing address of the ISA/KR | Authorized officer |
|---|---|
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2013/006427**

| Patent document cited in search report | Publication date | Patent family member | Publication date |
|---|---|---|---|
| KR 10-2010-0112935 A | 20/10/2010 | NONE | |
| KR 10-2005-0023693 A | 10/03/2005 | NONE | |
| KR 10-1995-0009031 B1 | 14/08/1995 | KR 10-1994-0013333 A | 15/07/1994 |
| KR 10-2009-0114721 A | 04/11/2009 | KR 10-0960902 B1 | 07/06/2010 |
| KR 10-0260593 B1 | 01/07/2000 | KR 10-1999-0070465 A | 15/09/1999 |

Form PCT/ISA/210 (patent family annex) (July 2009)